(19) **Europäisches Patentamt** / **European Patent Office** / **Office européen des brevets**

(11) **EP 3 913 796 A2**

(12) **EUROPEAN PATENT APPLICATION**

(43) Date of publication:
**24.11.2021 Bulletin 2021/47**

(51) Int Cl.:
*H02S 20/32* (2014.01)    *G06F 30/20* (2020.01)
*G05D 3/10* (2006.01)    *F24S 50/20* (2018.01)

(21) Application number: **21382453.5**

(22) Date of filing: **18.05.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.06.2020   ES 202031275 U**
**20.05.2020   EP 20175825**

(71) Applicant: **Soltec Innovations, S.L.**
**30500 Molina de Segura (ES)**

(72) Inventor: **Guerrero Pérez, Javier**
**30500 Molina de Segura (ES)**

(54) **METHOD FOR ENHANCING ENERGY PRODUCTION IN BIFACIAL SOLAR PANEL MODULES**

(57)    The invention relates to electric solar trackers moving solar panels and being controlled by a solar tracker controller. accounting for an estimation of the angle of positioning of the bifacial PV modules on a solar single axis tracker, in which the electrical energy produced is maximized by means of a process that quantifies the variation of irradiation on both the front and rear faces depending on the orientation angle of the module for each solar angle, and then the optimal position for the production of electrical energy is decided of all the solar trackers of the plant. The production of electrical energy can be further optimized by including an albedo modifying arrangement.

FIGURE 1

EP 3 913 796 A2

**Description**

## OBJECT OF THE INVENTION

The invention relates to the technical field of renewable energies and more particularly to solar energy.

The object of the invention is directed to managing and controlling a group of single axis solar trackers provided with bifacial solar panels.

## BACKGROUND ART

Bifacial modules produce solar power from both sides of the panel, also referred as double-sided panels. Whereas traditional opaque-back sheeted panels are "monofacial", bifacial modules expose both the front and backside of the solar cells. When bifacial modules are installed on a highly reflective surface (like a white TPO roof or on the ground with light-coloured stones), some bifacial module manufacturers claim up to a 30% increase in production just from the extra power generated from the rear.

Depending on the installation, it is commonly believed the higher a bifacial module is tilted, the more power it produces from its bifacial properties. Bifacial modules mounted flush to a rooftop block any reflected light from reaching the backside of the cells. That is why bifacial modules perform better on flat commercial rooftops and ground-mounted arrays, because there is more room for tilt and bouncing reflected light to the rear of the modules.

The growing global market for bifacial solar panels on trackers is expanding with new designs and more intense research and development on a range of fronts. The more complex requirements of bifacial panel systems are resulting in early adopter rewards of double-digit yield boosts for clients. As a result, the percentage of bifacial systems is expected to increase rapidly over the next few years. One basic reason that bifacial tracker designs will become increasingly accepted as cost beneficial is that less DC equipment is needed to provide the same energy yield as a single-axis tracker or a fixed-tilt system. The use of less equipment to produce an equal or superior yield lends an overall efficiency of up to 5% across a bifacial tracker system.

Ongoing industry research and field tests of bifacial panel optimization shows that the number of variables in enhancing performance is substantially higher than in a simple mono-facial solar system, whether fixed tilt or tracker-supported. Key factors include those that affect albedo, or ground-reflected light, which has already been shown to boost yield by 15-20% or more. Hence, the industry is facing at least one crucial problem: positioning solar trackers associated to bifacial modules so that energy production is maximised using both sides of the panel, namely maximizing generation on the rear face, but it also maximizes the shadow on the ground so that the energy reaching the rear of the module in the form of reflected irradiation is minimized.

US10289757B2 discloses automated optimization, customization or production methods for the design of a solar photovoltaic array, involving one or more or all components in a photovoltaic array, in which the products include system designs, production drawings, permitting and construction drawings, layouts for the mechanical and electrical systems, bill of materials and financial return analyses of such a photovoltaic array.

WO2007047048A2 discloses an array of solar powered photovoltaic modules is optimally oriented and operated to provide more electrical energy for uses such as powering an electrolyser system for hydrogen production. The array is positioned with its light receiving surface at an optimal angle, preferably a continually changing angle determined by two-axis solar tracking, when continually measured solar irradiance indicates suitable sunlight, and at a horizontal position when measured solar irradiance indicates excessive atmospheric cloudiness.

Existing algorithms optimize only the energy captured by the front side of the panel and are based on tracking either algorithms backed on empirical methods requiring long learning processes, or on measurement-based methods. Those methods known in the art can render unstable behaviours arising from inaccuracies in measurements or rapid changes in irradiation conditions.

Most solar tracker manufacturers seem to opt for astronomical tracking, i.e. keep the solar module sun oriented as if it were a monofacial module. CN108347221 discloses a Two-sided photovoltaic cell panel tracking control method and system with a 3D front and rear irradiation modelling, incorporating different operating modes depending on the rear irradiation measurement. The method disclosed therein comprises detecting a photovoltaic power generation area to obtain topographic characteristic data of the photovoltaic power generation area, surface light reflection characteristic data and power generation area irradiation data ; building a 3D photovoltaic simulation map based on terrain characteristic data, surface light reflection characteristic data and pre-set photovoltaic power plant layout; according to 3D photovoltaic simulation map, power generation area irradiation data, photovoltaic power plant system parameters, double-sided photovoltaic cells back irradiation data of the panel to create a back irradiation reflection model; and controlling the double-sided photovoltaic panel according to the tracking mode corresponding to the current weather type, combined with the back irradiation reflection model and the front irradiation data collected from the double-sided photovoltaic panel Perform photovoltaic tracking.

EP3400647 discloses a method for controlling the orientation of a solar module comprising a single-axis solar tracker orientable about an axis of rotation, and a photovoltaic device supported by said tracker and having upper and lower photoactive faces, said method comprising the following steps: measurement of a distribution of the so-called incident solar irradiance generated by the incident solar radiation from the sky, onto the upper face, said distribution being established according to a plurality of elevation angles; measurement of a distribution of the so-called reflective solar irradiance generated by the albedo solar radiation corresponding to the reflection of the solar radiation on the ground, onto the lower surface, said distribution being established according to a plurality of elevation angles; determination of an optimum orientation taking into account measurements of said distributions of the incident and reflective solar irradiance; and control of the orientation of the module according to said optimum orientation.

In order to improve the generated energy of photovoltaic module, it is normal practice to adjust inclination angles using the tracking system by tilting the panel to face the sun to absorb solar irradiation to the maximum extent.

CN110147123A provides a kind of photovoltaic module tracking system and its controller and angle control method, to improve photovoltaic module efficiency. In CN110147123A weather conditions are determined according to total irradiate of current levels and then a scattering model is determined accordingly. According to the scattering model and preset direct projection model and reflection model, photovoltaic module to be tracked is calculated in different angles under received irradiation level, and corresponding inclination angle is optimal inclination angle when determining that the irradiation level is maximum. The motor rotation for controlling the photovoltaic module tracking system, makes the photovoltaic module to be tracked to reach said optimal inclination angle.

CN110568865A discloses an intelligent optimization method and an intelligent tracking system for tracking angles of double-sided components, wherein a weather mode is determined according to a clear weather index eta, and if the weather mode is a cloudy mode, the tracking angle A of a photovoltaic component is equal to 0 degrees plus an optimized rotation angle alpha; if the photovoltaic module is in a multi-cloud mode, the tracking angle A of the photovoltaic module is equal to the traditional astronomical angle Ac+ optimizing the rotation angle alpha; if the mode is a clear day mode, the tracking angle A of the photovoltaic module is equal to the traditional astronomical angle Ac+ the optimum rotation angle $\alpha$. The method aims at the traditional astronomical tracking algorithm only considering front irradiation, considers the characteristics of power generation of the front side and the back side of the double-sided photovoltaic module, establishes a total irradiation model received by the double-sided module, calculates a theoretical tracking optimal angle according to different installation conditions and meteorological conditions, and improves the power generation capacity of the double-sided module.

CN110147123A or CN110568865A do not either solve the bifacial energy optimization for PV modules on coloured soils with a wavelength different to that of the sun. Neither CN110147123A nor CN110568865 A refer to the model that calculates the optimal angle applying to all trackers, our does. That is, they refer to only one optimal angle. For example, the explained methodologies therein would not work on uneven terrain or on solar plants introducing albedo-enhancing reflective materials and with a particular geometry.

Furthermore, known methodologies do not consider any module efficiency factors; therefore, the difference between front and rear sides is considered, rendering known method invalid for commercial modules with bifaciality factors of 0.6 or 0.7.

It is also desirable to have a solution not based on only one preset value based on three discrete weather-type intervals (very cloudy, cloudy and sunny), and that would work in all types of climate and weather conditions.

## SUMMARY OF THE INVENTION

Unlike methods that maximize irradiation the method of invention takes into account the technology of the photovoltaic cell, the solar spectrum used by the module and the bifaciality factor of the module, making it suitable for all module technologies, optimizing the electrical energy produced with much greater precision than the mentioned methods; since the object of invention is directed to a method that considers changes in the particular soil conditions produced by environmental conditions or human action, such as rain, snow, grass cutting, etc., optimizing the level of energy produced by the module with levels of precision similar to the methods that optimize electrical production based on measurements, taken directly from the strings without requiring electrical measurement sensors distributed by the plant. Known simulating methods are aimed at optimizing radiation, this is clear since no electricity values are measured. Known methodologies directed to optimizing electricity, measure electricity; whereas the object of the invention simulates electricity generation to optimize electricity production without measuring electricity.

Also, it is more reliable because it does not depend on instantaneous measurements, unlike the rest that are sensitive to erroneous readings from the sensors (such as spot dirt on the sensor). No measurements are taken, instead the different rear irradiation values are simulated, preferably using ray tracing techniques.

Finally, our proposal is effective from the first moment, avoiding the inaccuracies accumulated during the learning process of methods based on machine learning, as well as situations of indeterminacy when these types of methods face new conditions in which they do not have experience and they go to less-than-optimal positions.

The object of the invention provides a quantification of the irradiation variation on both the front and back sides of the panel based on the orientation angle of the module for each solar angle, and subsequently provides a calculation rendering the optimal position to produce electrical power of all the solar trackers arranged along the solar plant. For the estimation of rear irradiation at different angles, the geometric relationships between terrain slopes, solar angle, ground albedo, tracker geometry and module layout, as well as the properties of the module are considered.

In a preliminary phase of adjustment of parameters where the characterization of the bifacial ratio is performed according to various parameters, then incorporating the soil colors based on measures that contemplate the reflected wavelength spectrum. At this point, the inclusion of reflectors installed on the soil may directly affect model parameters $(B_n, C_n)$.

Then, for each angle variation the irradiation that reaches the back of the module is estimated in view of a combination of:

- Reflection on the directly illuminated area.
- Reflections on the shaded areas and diffuse irradiation.
- Reflections on the tracker parts themselves.

The method of the invention may give coverage to ground geometries with a mixture of different albedo values due different surface properties, such as grounds comprising grassy areas and grass-free areas. In addition, non-uniform surfaces such as location of reflectors of enhance albedo materials with a particular geometry are also considered with the proposed method.

Furthermore, the decrease in frontal irradiation may also be evaluated due to the loss of orientation depending on the angle.

Finally, based on both quantifications, an estimation of the tracker angle that maximizes the sum of frontal irradiation plus rear irradiation weighted with the module bifaciality, is carried out for each solar tracker.

The method of the invention preferably considers respective positions of each solar tracker as a batch; hence the influence of each solar tracker position on the rest of the solar tracker production is considered, optimizing the behavior of the ensemble taken as a whole.

In another aspect of the object of the invention, an arrangement that is capable of maximizing the bifacial gain of the trackers by increasing the irradiation reflected to the rear of the module is provided, said arrangement consisting of at last one membrane or membrane system that acts as reflectors of sunlight on the back of the solar panel, with particular geometries, mechanical and optical properties respectively placed in specific positions along the solar trackers so bifacial gain is increased.

The present invention discloses a method accounting for an estimation of the angle of positioning of the bifacial PV modules on a solar single axis tracker, in which the electrical energy produced is maximized by means of a process that quantifies the variation of irradiation on both the front and rear faces depending on the orientation angle of the module for each solar angle, and then the optimal position for the production of electrical energy is decided of all the solar trackers of the plant. As per the object of the invention the following angles are considered: deviation angle ($\varepsilon$), front of the solar panel-oriented angle or just oriented angle ($\beta$), optimum angle ($\theta$); being $\theta = \beta + \varepsilon$

The method object of the invention provides a higher power production in bifacial panels with front and rear sides by yielding an optimal angle position for the solar tracker that maintains a significant rear side power generation, maintaining a high value for the front side power generation. Since the method object of the invention is based on moving the solar tracker according to a parameterized model, unstable behaviours arising from inaccuracies in measurements or rapid changes in irradiation conditions are avoided. Besides, the method hereby described improves production compared to monofacial panel-based methods, which do not consider energy on the back side. In addition, it achieves a level of precision without the need for electrical measurements that are easily accessible in a large PV system. Finally, it maintains reliability before changes in irradiation and soil albedo without the need to spend a learning period where it is ineffective, overcoming this drawback of the methods that use machine learning.

The method of the invention is preferably implemented in the control system of the photovoltaic solar trackers for bifacial modules. The control system processes the input data from the weather forecasts and the sensors of the plant, to determine the angle at which each of the lots must be positioned. The bifacial photovoltaic modules are oriented in the plane determined by the method of the invention, which optimizes the energy produced front and rear sides of the panel.

The method of the invention features the inclusion of the whole solar plant specifications (with due regard to the corresponding restrictions and particularities, e.g., unevenness of the terrain) when calculating as many optimal angles as necessary to optimize the whole solar plant energy yield; being capable of processing and including surfaces other than soil, i.e. non-uniform anisotropic reflective surfaces. Such as those solar plant encompassing albedo-enhancing reflective materials and/or with particular geometries.

In order to increase accuracy of the calculation of the optimal angles, and opposite to known art, the method of the invention accounts for weather forecast deviation and updates it by means of a Confident Indicator (CR) and considers the bifaciality factor of the PV modules, that is, a difference energy conversion efficiency between the rear side and the front side, independent for each wavelength. Accuracy is also maximized when calculating optimal angles taking into accounts all possible combinations of cloudy and sunny weather conditions due to a continuous assessment of the Diffuse Ratio (Diffuse Irradiation / Global irradiation) values.

**DESCRIPTION OF THE DRAWINGS**

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:

Figure 1.- Shows a diagram illustrating the flowchart of the method of the invention.

Figure 2.- Shows an illustration depicting the difference between standard tracking (sun-oriented) and after the implementation of the method of the invention.

Figure 3.- Show a graph representing the correspondence of Bifacial Ratio (BR) and deviation expressed in degrees at a certain moment of the day, 11am expressed as $BR_{h=11}(\varepsilon) = 11.16 + 0.24\varepsilon + 0.0027\varepsilon^2 - 0.0000048\varepsilon^3$

**DETAILED DESCRIPTION**

In a preferred embodiment of the invention, it is described a method for the movement of the solar tracker with bifacial modules that maximizes the electrical energy produced, by estimating the irradiation reflected in the ground with the wavelengths that the photovoltaic cell uses to convert it into electrical energy. For the implementation of the method of the invention, it requires a previous phase of parameter adjustment where a characterization of the bifacial ratio is performed based on various parameters, incorporating the colours of the soil based on measurements that contemplate the reflected wavelength spectrum.

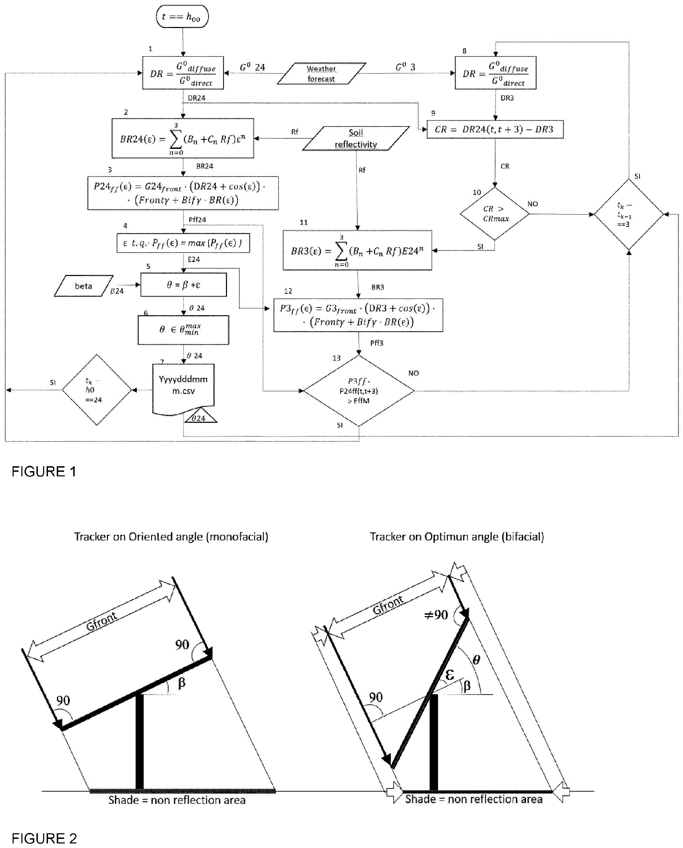

For this preferred embodiment, as depicted in figure 2, an oriented angle ($\beta$) is associated to a monofacial tracking procedure, that is, an angle where the frontal panel is oriented to the sun, an optimum angle ($\theta$) is that tracker's position angle in the bifacial angle (optimized for bifacial). Being a deviation angle ($\varepsilon$) a disorientation with respect to the sun-oriented angle ($\beta$) to the bifacial angle. being $\theta = \beta + \varepsilon$

At this point it might be considered he inclusion of reflecting elements or reflectors, or other kind of reflective soil covers, which directly affect parameters ($Bn, Cn$) settings, as they may modify the behaviour of the soil reflection.

The method consists of the following steps, described from a start time of a daily cycle being initial time $t = (h0)$:

(1) Calculation of a first relationship (DR) - referred as (DR24) in figure 1 - between direct irradiation $G^0_{direct}$ and diffuse irradiation $G^0_{diffuse}$ in the sun-oriented plane of the forecast from a current time, namely from the initial current time $h_0$ to a time of the next day $h_0 + 24$ - twenty four hours.

$$DR = \frac{G^0_{diffuse}}{G^0_{direct}}$$

being $G^0 = G^0$ 24 Regarding forecasting: The method mainly uses two variables, *G front* (which is calculated used known methodologies in the art) and the *DR* (diffuse/direct ratio). And for every wavelength. Depending on the weather forecast provide *direct Ghorizontal* and *diffuse Ghorizontal,* or direct and diffuse component of *G front,* may be received. Since there is no wavelength weather forecast available a distribution of typical wavelengths of solar radiation is applied.

(2) Estimation of Bifacial Ratio $BR(\varepsilon)$ - referred in figure 1 as (BR24) -considering the spectral response of the irradiation reflected in the soil for a range of deviation angles with respect to the oriented value ($\varepsilon$), from *DR*24 and soil reflection information (*Rf*), for different wavelengths *j* from a current time $h_0$ to the starting time of the next day. Taking the Bifacial Ratio $BR(\varepsilon)$ as a vector matrix embracing bifacial ratio values for each wavelength *j* and every deviation angle ($\varepsilon$), that would be expressed according to the parameters $b_{nj}$ y $c_{nj}$, as:

$$BR(\varepsilon) = \sum_{n=0}^{3} A_n \varepsilon^n$$

being:

$$A_n = B_n + C_n Rf$$

So, for each wavelength, the calculation is performed as:

$$BR_j(\varepsilon) = \left(a_{0j} + a_{1j} \cdot \varepsilon + a_{2j} \cdot \epsilon^2 + a_{3j} \cdot \epsilon^3\right)$$

(3) a first evaluation of effective energy ($P_{ff}$) usable by the module for the production of electrical energy- referred as ($Pff24$) in figure 1- considering the spectral response of the module on each of the front and rear faces, in the range of deviation angle ($\varepsilon$) with respect the oriented angle ($\beta$), from the current time to an initial time of the next day calculated as a sum for all wavelengths $j$, using the matrix formula:

$$P_{ff}(\epsilon) = G_{front} \cdot (D + cos(\varepsilon))\left(Front\gamma + Bif\gamma \cdot BR(\varepsilon)\right)$$

(4) Determination of an angle of deviation ($\varepsilon$) with respect to the oriented angle ($\beta$) that maximizes this energy calculated in step 3, from the current time to the starting time of the next day ($\varepsilon24$).

(5) Assessing the tracker position angle ($\theta$) as the sum of this angle of deviation calculated in step 4 ($\varepsilon$) with the monofacial oriented angle ($\beta$) calculated using existing bibliography methods such as, Solar Position Algorithm (SPA, for the remaining hours until time t=$h0$ of the next day ($\theta24$).

(6) Apply an optimization of the combination of positions of all the solar trackers of the photovoltaic system, and correction of the optimum angle ($\theta$) of each solar tracker incorporating the movement restrictions of the solar tracker.

(7) Generation of a table with the information of the tracker position angle ($\theta$) of the solar panels associated to each solar tracker for each hour, for the remaining hours until $h0$ of the next day ($TH24$ in figure 1).

(8) Preferably every three hours, calculation of a second relationship between direct and diffuse irradiation ($DR$) in the sun-oriented plane value- referred as ($DR3$) in figure 1 - with updated with the new irradiation forecast next three hours. This step can be combined with averaging checks in the field if any are ($DR3$).

$$DR = \frac{G^0{}_{diffuse}}{G^0{}_{direct}}$$

being $G^0 = G^0 3$

(9) Calculation of the variation between the initial forecast $DR24$ for the next three hours and the current forecast $DR3$, ($CR$).

(10) If the comparison exceeds a confidence value ($CR\ max$), go to step 11. If not, no action is taken.

(11) Estimation of a Bifacial Ratio $BR(\varepsilon)$ which is an update of the first Bifacial Ratio $BR(\varepsilon)$ - referred in figure 1 as $BR3$- now considering update data related to spectral response of the irradiation reflected from the sol ($Rf$), from the measurement or forecast of horizontal irradiation, for a range of deviation angles ($\varepsilon$) around the oriented angle ($B$), for the next hours (preferably three hours) taking the Bifacial Ratio $BR(\varepsilon)$ as a vector matrix embracing bifacial ratio Bifacial Ratio $BR$ values for each wavelength $j$ and every angle of the range $\varepsilon$, that would be expressed according to the parameters $b_{nj}$ y $c_{nj}$, as:

$$BR(\varepsilon) = \sum_{n=0}^{3} A_n \varepsilon^n$$

being:

$$A_n = B_n + C_n Rf$$

So, for each wavelength, the calculation is performed as:

$$BR_j(\varepsilon) = \left(a_{0j} + a_{1j} \cdot \varepsilon + a_{2j} \cdot \epsilon^2 + a_{3j} \cdot \epsilon^3\right)$$

(12) Evaluation of the effective energy usable by the module for the production of electrical energy - referred as (*Pff3*) in figure 1- considering the spectral response of the module on each of the front and rear faces, in the deviation angle ($\varepsilon$) range, for the next 3 hours calculated as a sum for all wavelengths *j*, using the matrix formula:

$$P_{ff}(\epsilon) = G_{front} \cdot (D + cos(\varepsilon))\left(Front\gamma + Bif\gamma \cdot BR(\varepsilon)\right)$$

(13) Comparison of (*Pff3*) with the next three hours that were calculated in (*Pff24*). If any of the three hours improves the energy more than a threshold value *EffM,* then it reruns from step 1 and runs through 7

$$Pff3 - Pff24(t, t+3h) > EffM \quad Pff24(t, t+3) > EffM$$

being *EffM* set up as a percentage of front irradiation (*effm*) with a minimum irradiation value ($G_{min}$). In a default preferred embodiment of the method of the invention embraces parameters $G_{min}$ = 50 *Wh/m²*, *effm* = 0.01

$$EffM = max(G_{min}, \; effm \cdot G_{front})$$

If this condition is not met, there is no action.

By doing this, the object of the invention solves the problem of how to position and sun track a bifacial PV module so that electrical output maximizes. Since bifacial modules also collects energy from the rear face, so if we direct it to the sun and maximize the front face, we do not always maximize the total energy. Hence, the proposed method calculates the optimum angle so that the modules can maximize energy production.

The method of invention is meant to be ran cyclically each day from the time described from the start time of the daily cycle (*h0*). Furthermore, it is capable of optimally using energy if devices are installed in the plant to increase the albedo of the soil.

Following the flowchart of figure 1, the method of the objection may be deployed with the following starting parameters:

- Soil reflectivity *Rf*, being a vector that describes the reflectivity of the soil for each wavelength (*albedo$_j$*)

$$Rf = \begin{pmatrix} albedo_0 \\ albedo_j \end{pmatrix}$$

- Model parameters $B_n$ and $C_n$ , being parameters adjusted by modelling the plant followed by a Bifacial Ratio (BR) characterization for each value of deviation angle ($\varepsilon$) based on efficiency, such that:

$$B_n = \begin{pmatrix} b_{n0} \\ b_{nj} \end{pmatrix}$$

$$C_n = \begin{pmatrix} c_{n0} \\ c_{nj} \end{pmatrix}$$

Model parameters $b_{nj}$ and $c_{nj}$ may be assessed by previous simulation of *BR* the tracker scenario for different wavelengths chunk (*j*) of the soil, associated to i.e. color at each hour of the day during a year.

- being $\beta$ values of oriented angles of each solar tracker with monofacial panel, calculated using known methods in the art.
- Efficiency of the panel for each given wavelength *j* for the front and rear faces of the panel are parameters defined by the manufacturer, which in this method are expressed as vectors:

$$Bif\gamma = \begin{pmatrix} \gamma_0^{rear} \Big/ \gamma_0^{front} \\ \gamma_j^{rear} \Big/ \gamma_j^{front} \end{pmatrix}$$

$$Front\gamma = \begin{pmatrix} \gamma_0^{front} \\ \gamma_j^{front} \end{pmatrix}$$

The Bifacial Ratio Matrix *BR*($\varepsilon$) is considered as a vector matrix embracing bifacial ratio values for each wavelength *j* as a function of deviation angle $\varepsilon$ within the range, that would be expressed according to the parameters $b_{nj}$ y $c_{nj}$, as:

$$BR(\varepsilon) = \sum_{n=0}^{3} A_n \varepsilon^n$$

being:

$$A_n = B_n + C_n Rf$$

So, for each wavelength, the calculation is performed as:

$$BR_j(\varepsilon) = \left( a_{0j} + a_{1j} \cdot \varepsilon + a_{2j} \cdot \epsilon^2 + a_{3j} \cdot \epsilon^3 \right)$$

Whereas the effective energy is calculated as a sum for all wavelengths *j*, using the following formula:

$$P_{ff}(\epsilon) = G_{front} \cdot (D + cos(\varepsilon))\left(Front\gamma + Bif\gamma \cdot BR(\varepsilon)\right)$$

Which is equivalent to:

$$P_{ff}(\epsilon) = \sum_{j=0} \left( G_{front} \cdot (D + cos(\varepsilon)) \left( \gamma_j^{front} + \gamma_j^{rear} \cdot BR_j(\varepsilon) \right) \right)$$

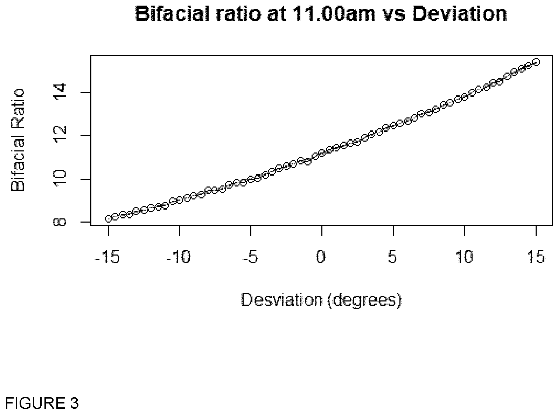

In an alternative embodiment of the invention a parameters adjustment phase may be carried out as a previous or first step of the method of the invention; said adjustment phase is aimed at those parameters that characterize the rear irradiation behaviour under particularities of the site or solar plant. In this adjustment phase, the Bifacial Ratio (*BR*) (relation between module rear and front irradiation) is expressed as a polynomial function depending on the variables that may influence the reflected irradiation behavior. In this phase, particular geometry of the scene, including reflectors and structure is modelled and module rear irradiation for a set of tilted angles is simulated with ray tracking, under a combination of ground albedo and horizontal irradiation values. Rear irradiation is split in different stripes of wavelength, and then we obtain a value of $BR_j^h$ for each hour (h), irradiation level (g), ground albedo (a) and wavelength stripe (j) for a set of tilt angles. expressing tilt angle as the deviation respect with the sun-oriented one, set of Bifacial Ratio (BR) values seems like the graph of figure 3 wherein the correspondence of Bifacial Ratio (BR) and deviation expressed in degrees at a certain moment of the day, 11am may be expressed as $BR_{h=11}(\varepsilon) = 11.16 + 0.24\varepsilon + 0.0027\varepsilon^2 - 0.0000048\varepsilon^3$

This set of parameters is adjusted to a 3rd order polynomial, obtaining values of $a_j^h$ according to:

$$BR_j^h(\varepsilon) = \sum_{n=0}^{3} a_{j\ n}^h \varepsilon^n$$

For each horizontal irradiation level, the simulation for a combination of two ground albedo values allows to express $a_j^h$ as

$$a_{j\ n}^h(albedo) = b_{j\ n}^h + c_{j\ n}^h \cdot albedoj$$

In addition, the value of Diffuse Ratio (DR) for the three irradiation levels is assessed as the relationship between the Diffuse and Direct horizontal irradiation.

$$DR^h = \frac{G^h_{diffuse}}{G^h_{direct}}$$

In the same way, the values of $b_{j\ n}^h$ and $c_{j\ n}^h$ are employed for assess six different parameters $f_{j\ n}^h$, $g_{j\ n}^h$, $h_{j\ n}^h$, $j_{j\ n}^h$, $k_{j\ n}^h$, $l_{j\ n}^h$ that accomplish the following expresions.

$$b_{j\ n}^h(albedo) = f_{j\ n}^h + g_{j\ n}^h \cdot DR_j^h + h_{j\ n}^h \cdot DR_j^{h2}$$

$$c_{j\ n}^h(albedo) = j_{j\ n}^h + k_{j\ n}^h \cdot DR_j^h + l_{j\ n}^h \cdot DR_j^{h2}$$

Those values may define a matrix table with all the hours of the year, for example.

$$F_n = \begin{pmatrix} f_{j=0\ n}^{h=0} & \cdots & f_{j=0\ n}^{h=0} \\ \vdots & \ddots & \vdots \\ f_{j\ n}^{h=365} & \cdots & f_{j\ n}^{h=365} \end{pmatrix}$$

Once the adjustment, is accomplished the method of the invention in the alternative embodiment is set to run each 24 hours at an hour that is preset value, preferably at night. Then, from weather forecast data, values of diffuse and direct irradiation and direct of each hour, $G^h_{diffuse}$ and $G^h_{direct}$ are extracted.

Then, hour by hour the *DR* is calculated in similar way as it was calculated in the preferred embodiment.

$$G^h{}_{diffuse} = \frac{G^h{}_{diffuse}}{G^h{}_{direct}}$$

Please note that, weather forecast data may also include the wavelength distribution of irradiation.

If not, method allow to include a typical distribution. If we strip wavelength spectrum in three parts, we will assess a *DR* value for each hour we will have:

$DR^h{}_{j=0}$ for wavelength <400nm,

$DR^h{}_{j=1}$ for wavelength >400nm and <600nm

$DR^h{}_{j=3}$ for wavelength <600nm).

Doing that for the next 24 hours, and including in a matrix, *DR*24 is assessed as:

$$DR24 = \begin{pmatrix} DR_{j=0}^{h=0} & \cdots & DR_{j=0}^{h=24} \\ \vdots & \ddots & \vdots \\ DR_{j=i}^{h=0} & \cdots & DR_{j=i}^{h=24} \end{pmatrix}$$

Note that for the rest of this embodiment j are the assessment for each wavelength stripe and h for each hour.

STEP 2:

In the same way, we also have the soil reflectivity for each strip of wavelength introduced in a matrix *Rf*, as:

$$Rf = \begin{pmatrix} albedo_0 \\ albedo_j \end{pmatrix}$$

Then, we take *DR*24 from step 1 and *Rf* to assess the Bifacial Ratio expression as a function of the deviation angle (ε) by using parameters $f_{jn}^h$ to $l_{jn}^h$ assessed in the preliminary step. This expressions for each hour in matrix assessment are:

$$BR(\varepsilon) = \sum_{n=0}^{3} A_n \varepsilon^n$$

Where,

$$A_n = B_n + C_n Rf$$

Where,

$$B_n = F_n + G_n \cdot DR24 + H_n \cdot DR24^2$$

$$C_n = J_n + K_n \cdot DR24 + L_n \cdot DR24^2$$

$$B_n = F_n + G_n \cdot DR24 + H_n \cdot DR24^2$$

$$C_n = J_n + K_n \cdot DR24 + L_n \cdot DR24^2$$

And we compose the vector of BR24 as

$$BR24 = A_n \, \varepsilon N$$

Where $\varepsilon N$ is a vector with $\varepsilon$ from 0 to 3 exponents:

$$\varepsilon N = \begin{pmatrix} 1 \\ \varepsilon \\ \varepsilon^2 \\ \varepsilon^3 \end{pmatrix}$$

For clarification, the BR expression of 1 hour (h) in a wavelength strip (j), would be:

$$BR \,_j^{\,h}(\varepsilon) = \left( a_0{}_j^h + a_1{}_j^h \cdot \varepsilon + a_2{}_j^h \cdot \epsilon^2 + a_3{}_j^h \cdot \epsilon^3 \right)$$

where

$$a_0{}_j^h = b_0{}_j^h + c_0{}_j^h \cdot albedo_j$$

and

$$b_0{}_j^h = f_0{}_j^h + g_0{}_j^h \cdot DR_j^h + h_0{}_j^h \cdot DR_j^{h\,2}$$

and the rest of $a_1{}_j^h$, $a_2{}_j^h$ and $a_3{}_j^h$ are assessed in the same way.

Finally a BR24 matrix as a function of $\varepsilon$ is obtained,

$$BR24 = \begin{pmatrix} BR_{j=0}^{h=0} & \cdots & BR_{j=0}^{h=24} \\ \vdots & \ddots & \vdots \\ BR_{j=i}^{h=0} & \cdots & BR_{j=i}^{h=24} \end{pmatrix}$$

STEP 3:

Information of the efficiency of the energy conversion for each strip of wavelength in front and rear side ( $\gamma_j^{rear}$ and $\gamma_j^{front}$ ) as constant values in *Bify* and *Front$\gamma$* as introduced as a matrix defined as:

$$Bif\gamma = \begin{pmatrix} \gamma_0^{rear} \Big/ \gamma_0^{front} \\ \gamma_j^{rear} \Big/ \gamma_j^{front} \end{pmatrix}$$

$$Front\gamma = \begin{pmatrix} \gamma_0^{front} \\ \gamma_j^{front} \end{pmatrix}$$

Then, we take $BR(\varepsilon)$ from step 2 estimate the energy that can be converted into electricy, as function of $\varepsilon$, by using the following matrix expresión:

$$P24_{ff} = G24_{front} \cdot (DR24 + cos(\varepsilon))\left(Front\gamma + Bif\gamma \cdot BR24(\varepsilon)\right)$$

For clarification, $P24_{ff}$ matrix is a vector matrix with $P24_{ff}^h$ for each hour. And $P24_{ff}^h$ Is the result of an addition of power for each strip of wavelength $P24_{ff}^h$ . Analitiacally is the expression:

$$P24_{ff} = \begin{pmatrix} P24_{ff}^{h=0} \\ P24_{ff}^{h} \\ P24_{ff}^{h=24} \end{pmatrix}$$

$$P24_{ff}^h(\varepsilon) = \sum_{j=0}^{j=i}\left(G_{front_j}^h \cdot (DR_j^h + cos(\varepsilon))\left(\gamma_j^{front} + \gamma_j^{rear}\Big/\gamma_j^{front} \cdot BR_j^h(\varepsilon)\right)\right)$$

STEP 4:

In this step the angle that maximizes power in each hour ($P24_{ff}^h(\varepsilon)$) is found, by applying zero derivate to the $P24_{ff}^h(\varepsilon)$, and taking the zero-closest solution of $\varepsilon$.
The solution for the next hours is the matrix:

$$E24 = \begin{pmatrix} \varepsilon^{h=0} \\ \varepsilon^h \\ \varepsilon^{h=24} \end{pmatrix}$$

STEP 5

For each hour we assess the sun-oriented tilted angle according to NREL Solar Position Algorithm obtaining $\beta^h$
Then we compose the vector matrix $\beta24$ that it is added to $E24$ in order to obtaining a matrix $\theta24$ that includes the optimal tilted tracker angles for each hour the tracker tilted angle ($\theta^h$) $\theta24 = \beta24 + E24$
In this point, the time resolution can be increased up to minutes, interpolating linearly values of $E24$.

STEP 6

At this point, $\theta^h$ value is limited to tracker mechanical limits. In addition, a shading assessment is applied empoying backtracking algoritms to avoid tracker shading, obtaining a set of combinations of $\theta^h_{traclcer}$ is obtained. Finally,

$P24_{ff}^h{}_{tracker}$ is assessed with the multiple combinations of $\theta^h_{tracker}$ for each tracker, and the addition of $P24_{ff}^h{}_{tracker}$ is assessed.
The higher power combination is selected and 24 hours vector $\theta24$ is conformed for each tracker.

STEP 7

Generation csv file with a table with the information of the tracker position angle ($\theta$) of the solar panels associated to each solar tracker for the next 24 hours.

STEP 8

Every three hours, a new matrix *DR*3 similarity to step 1 is conformed taking the updated irradiation provision of the weather forecast.

STEP 9

New DR3 of step 8 is compared hour by hour with the older *DR*24 made in step 1. The addition of differences between them is called Confident Ratio (*CR*).
For an example if current hour is 10. The *CR* is the sum of differences in *DRh* assessment at 10,11 and 12.

$$CR = \sum_{h=10}^{h=12} abs(DR24^h - DR3^h)$$

STEP 10

Simple comparison respect to an allowed *CRmax,* this is an pre-set parameter that is usually fixed to 0.05.
Should this comparison exceed said value, no action is taken, just wait for the next three hours and back to step 9.

STEP 11

If the comparison exceeds a confidence value *(CR max)* we would apply all the same formulas of step 2 for the estimation of a Bifacial Ratio but with the updated values of *DR*3. Then we will assess a matrix of 3 values called *BR*3,

STEP 12

We will assess the effective power by using the same formula than in step 3, but in this case only for 3 hours, and with updated values of *BR*3 and *DR*3.
The result is a vector matrix *P3$_{ff}$* with the power or each of the three hours as a function of deviation angle.

STEP 13

Taking the angles $\theta$24 assessed in step 5, the total period energy for the newt three hours is assessed with the three expressions of *P3$_{ff}$* of step 12, and with correspond hours of expression *P24$_{ff}$* assessed in step 3.
If *P3$_{ff}$* for the period means an improvement respect to the one assessed in step 3 lower than *EffM,* wich is a preset parameter of the algorithm, usually fixed at 1% of *P3$_{ff}$*, it is considered that the new provision does not improve the previous one. Any action is taking.
However, if higher means that the old forecast were not accuracy. Then then all the steps for the 24 hours are applied again for the next 24 hours-, forcing the execution of step 1 unless the day is not totally ended.
At each moment, trackers in the site are moving according to the time-defined table. The method of the invention provides an improvement in energy production since the optimal angle depends on the weather conditions. Being *P24* the power estimated that would be produced with a 24 hours ago weather forecast (used for assessing *DR24*), and offers a provision of optimal angles ($\theta$24). But the updated forecast for the next 3 hours is always more accurate. If there are not weather forecast modifications, then $\theta$24 is considered to still be valid (hence no action is carried out and the method comprises waiting until the next forecast update). But if there are weather modifications in *DR3* respect to *DR24* two possible scenarios arise (the method is directed to steps 11 and 12) and:

a) the energy estimation of provision angles ($\theta$24) with updated forecast (*DR3*) still is the same or higher than the old estimation ($\theta$24 and *DR24*). In this case the provision of optimal angles ($\theta$24) is accounted as good, and not $\theta$ update is needed.
b) If case the provision of optimal angles ($\theta$24) with updated forecast (*DR3*) still produce less energy, then and updated calculation of said provision of optimal angles ($\theta$24) angles is carried out.

Summarizing, the method of the invention encompasses comparing *P24ff* and *P3ff.*

In any embodiment of the invention, produced energy can be further optimized by modifying the soil so albedo radiation to be captured is maximized in such a way that it is possible to obtain an increase in the albedo radiation captured by bifacial solar panels. This can be achieved by incorporating a radiation reflector that may comprise a preferably flexible, reflective membrane intended to be mounted on the ground in front of and / or behind the photovoltaic solar panels. Each albedo reflector comprises a reflective membrane that reflects the albedo radiation towards the face of the bifacial panels on which the solar radiation is not directly incident. Thus, since the membrane has better reflection, including said reflector solar power generation is increased. In order to achieve better power outputs, the membrane has an essentially white colour and is made of a geosynthetic material or technical textile material that may comprise titanium oxide and having a rectangular shape with a length dimension along the projection of the axis of rotation no azimuthal field, and a width dimension, perpendicular to said projection, and less than the length dimension.

The membrane can be arranged horizontally or with an inclination. Likewise, the membrane can be fixed to the ground and / or to the tracker. In the case of a horizontal arrangement, the solar plant may comprise weights on the perimeter of the membrane, or alternatively the perimeter of the membrane may be buried in the ground. For its part, in the case of an inclined membrane, the membrane can comprise eyelets along at least part of its perimeter, where the installation also comprises one or more ropes that pass through one or more or of the eyelets to fix the membrane. to vertical fixings.

**Claims**

1. A method for enhancing energy production in bifacial solar panel modules arranged in a solar plant, the method being **characterised by** comprising at a current time ($h$0):

   i. calculation of a relationship between direct and diffuse irradiation (DR) in an oriented angle ($\beta$) based on weather forecast data from the current time ($h$0) until an initial time of the next day ($h$0 + 24),

   ii. estimation of a bifacial ratio (BR) considering the spectral response of the irradiation reflected from the soil for a range of deviation angles ($\varepsilon$) values comprised around an oriented angle ($\beta$) value where the front of the bifacial solar panel is oriented to the sun, from the relationship between direct and diffuse irradiation in the sun-oriented plane and soil reflectivity (Rf) for different wavelengths until the initial time of the next day ($h$0 + 24),

   iii. evaluation of the effective energy (Pff) usable by the solar panel for the production of electrical energy, considering the spectral response of the solar panel on each of the front and rear faces, as a function of a deviation angle ($\varepsilon$) with respect to an oriented angle ($\beta$), from the current time ($h$0) until the initial time of the next day ($h$0 + 24),

   iv. determination of the deviation angle ($\varepsilon$) from the oriented angle value ($\beta$), that maximizes the effective energy usable by the module for the production of electrical energy calculated in step iii, from the current time ($h$0) until the initial time of the next day ($h$0 + 24),

   v. calculation of an optimum angle ($\theta$); being: $\theta = \beta + \varepsilon$, for the remaining hours until the initial time of the next day ($h$0 + 24),

   vi. optimization of the combination of respective optimum angles ($\theta$) of all solar trackers and correction of said respective optimum angles ($\theta$) of each solar tracker by incorporating movement restrictions,

   vii. collecting and storing information of each respective optimum angle ($\theta$) of each tracker for each hour, for the remaining hours until the initial time of the next day ($h$0 + 24),

   viii. updating the relationship between direct and diffuse irradiation (DR) in the sun-oriented plane value with new irradiation forecast data generating a second relationship between direct and diffuse irradiation (DRx),

   ix. calculation of a variation (CR) between the previous assessment forecast of relationship between direct and diffuse irradiation (DR) for the next hours and the updated forecast of the relationship between direct and diffuse irradiation (DR),

   x. when the variation (CR) exceeds a confidence value (CR max) the method further comprising an estimation of the bifacial ratio (BR) considering the soil reflectivity (Rf), from the measurement or forecast of horizontal irradiation, for a range of deviation angles ($\varepsilon$) around the oriented value ($\beta$), for the period of forecast update, preference a minimum of three hours, and

   xi. evaluation of the effective energy (Pff) usable by the solar panel for the production of electrical energy, considering the spectral response of the solar panel on each of the front and rear faces, as a function of a deviation angle ($\varepsilon$) with respect to an oriented angle ($\beta$)The method of claim 2 wherein the diffuse irradiation (DR) value is updated every forecast update period defined, preference a minimum of three hours (DR3).

2. The method of claim 1 wherein estimation of rear irradiation at different solar tracker angles comprises considering the properties of the solar panel such as bifaciality and efficiency as a function of radiation wavelength.

3. The method of claim 2 wherein the spectral response of the irradiation reflected in the ground is produced from measurement of horizontal irradiation or forecast of horizontal irradiation.

4. The method of claim 1 further comprising an arrangement configured to maximize the bifacial gain of the trackers by increasing the irradiation reflected to the rear of the module is provided, said arrangement consisting of at last one membrane or membrane system arranged in such a way that acts as reflectors of sunlight on the back of the solar panel.

5. A method for enhancing energy production in bifacial solar panel modules having a front side and a rear side, arranged in a solar plant, the method being **characterised by** arranging an arrangement configured to maximize the bifacial gain of the trackers by increasing the irradiation reflected to the rear of the module is provided, said arrangement consisting of at last one membrane or membrane system arranged in such a way that acts as reflectors of sunlight on the back of the solar panel a reflective surface and by comprising:

   a. characterizing rear irradiation behavior under particularities of the solar plant, said characterization comprising calculating a Bifacial Ratio as a relationship between module rear and front irradiation expressed as a polynomial function depending on the variables related to the reflected irradiation behavior by:

   i. modelling geometries, including reflectors and structures of the solar plant, and
   ii. simulating by ray tracking module rear irradiation for a set of tilted angles under a combination of ground albedo and horizontal irradiation values,

   b. splitting read irradiation split different stripes of wavelength,

   c. calculating a value of Bifacial Ratio for each hour $\left(BR_j^h\right)$ being (h)*hour,* irradiation level (*g*), ground albedo (*a*) and wavelength stripe (*j*) for a set of tilt angles expressing tilt angle as the deviation angle ($\varepsilon$) in respect with a sun-oriented angle ($\beta$) as:

$$BR_j^h(\varepsilon) = \sum_{n=0}^{3} a_{j\,n}^h \, \varepsilon^n$$

   d. for each horizontal irradiation level, simulating for a combination of two ground albedo values expressing

$$a_{j\,n}^h(albedo) = b_{j\,n}^h + c_{j\,n}^h \cdot albedoj$$

   e. calculating the value of Diffuse Ratio (DR) for the three irradiation levels of the stripes following:

$$DR^h = \frac{G^h_{diffuse}}{G^h_{direct}}$$

   f. calculating the values of $b_{j\,n}^h$ and $c_{j\,n}^h$ for assess six parameters $f_{j\,n}^h, \ g_{j\,n}^h, \ h_{j\,n}^h, \ j_{j\,n}^h, \ k_{j\,n}^h, \ l_{j\,n}^h$ that accomplish the following expressions:

$$b_{j\,n}^h(albedo) = f_{j\,n}^h + g_{j\,n}^h \cdot DR_j^h + h_{j\,n}^h \cdot DR_j^{h^2}$$

$$c_{j\,n}^h(albedo) = j_{j\,n}^h + k_{j\,n}^h \cdot DR_j^h + l_{j\,n}^h \cdot DR_j^{h^2}$$

g. conforming a Matrix table with all the hours of the year, as

$$F_n = \begin{pmatrix} f_{j=0}^{h=0}{}_n & \cdots & f_{j=0}^{h=0}{}_n \\ \vdots & \ddots & \vdots \\ f_j^{h=365}{}_n & \cdots & f_j^{h=365}{}_n \end{pmatrix}$$

h. calculating a relationship between direct and diffuse irradiation (DR) in the sun-oriented angle ($\beta$) based on weather forecast data, said calculation being carried out every hour according to:

$$G^h{}_{diffuse} = \frac{G^h{}_{diffuse}}{G^h{}_{direct}}$$

i. calculating diffuse irradiation for the next 24 hours (DR24) as:

$$DR24 = \begin{pmatrix} DR_{j=0}^{h=0} & \cdots & DR_{j=0}^{h=24} \\ \vdots & \ddots & \vdots \\ DR_{j=i}^{h=0} & \cdots & DR_{j=i}^{h=24} \end{pmatrix}$$

being $j$ the assessment for each wavelength stripe and $h$ for each hour.
j. calculating soil reflectivity (Rf) values for each wavelength stripe as:

$$Rf = \begin{pmatrix} albedo_0 \\ albedo_j \end{pmatrix}$$

k. calculating Bifacial Ratio as a function of the deviation angle $BR(\varepsilon)$ being ($\varepsilon$) the deviation angle, using parameters $f_{jn}^h$ to $l_{jn}^h$ as:

$$BR(\varepsilon) = \sum_{n=0}^{3} A_n \varepsilon^n$$

being:

$$A_n = B_n + C_n Rf$$

$$B_n = F_n + G_n \cdot DR24 + H_n \cdot DR24^2$$

$$C_n = J_n + K_n \cdot DR24 + L_n \cdot DR24^2$$

$$B_n = F_n + G_n \cdot DR24 + H_n \cdot DR24^2$$

$$C_n = J_n + K_n \cdot DR24 + L_n \cdot DR24^2$$

l. composing a vector of the Bifacial Ratio for the next 24 hours $BR24$ as: B$R24 = A_n \varepsilon$N ,

Where εN is a vector with ε from 0 to 3 exponents:

$$\varepsilon N = \begin{pmatrix} 1 \\ \varepsilon \\ \varepsilon^2 \\ \varepsilon^3 \end{pmatrix}$$

m. calculating BR24 as a function of the deviation angle (ε) as:

$$BR24 = \begin{pmatrix} BR_{j=0}^{h=0} & \cdots & BR_{j=0}^{h=24} \\ \vdots & \ddots & \vdots \\ BR_{j=i}^{h=0} & \cdots & BR_{j=i}^{h=24} \end{pmatrix}$$

n. introducing efficiency of energy conversion for each strip of wavelength in front and rear sides of the solar panel ( $\gamma_j^{rear}$ , $\gamma_j^{front}$ ) in values in *Bify* and *Fronty* matrix defined as:

$$Bif\gamma = \begin{pmatrix} \gamma_0^{rear} \Big/ \gamma_0^{front} \\ \gamma_j^{rear} \Big/ \gamma_j^{front} \end{pmatrix}$$

$$Front\gamma = \begin{pmatrix} \gamma_0^{front} \\ \gamma_j^{front} \end{pmatrix}$$

o. calculate energy that can be converted into electricity for 24 hours, as function of the deviation angle (ε) using:

$$P24_{ff} = G24_{front} \cdot (DR24 + cos(\varepsilon))\big(Front\gamma + Bif\gamma \cdot BR24(\varepsilon)\big)$$

p. calculating an angle that maximizes power in each hour $(P24_{ff}^{h}(\varepsilon))$ by applying zero derivate to the $P24_{ff}^{h}(\varepsilon)$, and taking the zero-closest solution for the deviation angle (ε), wherein the solution for the next hours is the Epsilon matrix:

$$E24 = \begin{pmatrix} \varepsilon^{h=0} \\ \varepsilon^{h} \\ \varepsilon^{h=24} \end{pmatrix}$$

q. calculating a monofacial oriented angle for each hour $(\beta^h)$,
r. calculating a matrix $\theta24$ that includes the optimal tilted tracker angles for each hour the tracker tilted angle $(\theta^h)$ according to:

$$\theta24 = \beta24 + E24$$

s. applying backtracking algorithms to avoid tracker shading, obtaining a set of combinations of $\theta^h{}_{tracker}$,

t. calculating $P24_{ff}{}^{h}{}_{tracker}$ is assessed with the multiple combinations of $\theta^{h}{}_{tracker}$ for each tracker, and

the addition of $P24_{ff}{}^{h}{}_{tracker}$ is assessed.

u. selecting a higher power and 24 hours to define a vector $\theta24$ for each solar tracker.

v. calculating diffuse irradiation every three hours (*DR*3) conformed taking the updated irradiation provision of the weather forecast in the same (*DR*24) was calculated in step i),

w. comparing hour by hour diffuse irradiation every three hours (*DR*3) values with diffuse irradiation for the next 24 hours (*DR*24) values,

x. generating a Confident Ratio (*CR*) by adding differences between diffuse irradiation every three hours (*DR*3) values with diffuse irradiation for the next 24 hours (*DR*24) values found in the comparison,

y. calculating, when the Confident Ratio (*CR*) exceeds a maximum confidence value *(CR max),* the amount energy that can be converted into electricity for three hours, as function of the deviation angle (ε) using:

$$P3_{ff} = G3_{front} \cdot (\text{DR3} + cos(\varepsilon))\bigl(Front\gamma + Bif\gamma \cdot BR3(\varepsilon)\bigr),$$

and

z. comparing *P3$_{ff}$* with correspond hours of *P24$_{ff}$* and:

  i. determine angles $\theta24$ as optimal and no action is taken when $G3_{front}$ and DR3 calculated with weather forecast updated do not present a significant improvement in produced energy (*EffM*) in respect to *P24ff*, or

  ii. applying all the previous steps for the 24 hours again for the next 24hours when a significant improvement in produced energy (*EffM*) is determined in respect to *P24ff*.

**6.** The method of claim 5 wherein the weather forecast data comprises wavelength distribution of irradiation.

**7.** The method of claim 5 comprising using a typical distribution wherein wavelength spectrum in stripped, in such a way that for each hour (*h*):

  $DR^{h}{}_{j=0}$ for wavelength <400nm,
  $DR^{h}{}_{j=1}$ for wavelength >400nm and <600nm
  $DR^{h}{}_{j=3}$ for wavelength <600nm).

**8.** The method of claim 5 wherein (*CR max*) is set to 0.05.

**9.** The method of claim 5 wherein the improvement in produced energy *EffM* is a preset parameter set as a 1% of *P3$_{ff}$*.

**10.** The method of claim 5, wherein the Diffuse Ratio (*DR*) is assessed as a ratio between diffuse and direct irradiation on tilted plane as per:

$$DR = \frac{G_{diffuse}^{oriented}}{G_{direct}^{oriented}}$$

**11.** The method of claim 5, wherein the Diffuse Ratio (*DR*) is assessed as a ratio between the diffuse and global horizontal irradiations as per:

$$DR = \frac{G_{diffuse}^{0}}{G_{global}^{0}}$$

FIGURE 1

FIGURE 2

Bifacial ratio at 11.00am vs Deviation

FIGURE 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10289757 B2
- WO 2007047048 A2
- CN 108347221
- EP 3400647 A
- CN 110147123 A
- CN 110568865 A